# EUROPEAN PATENT APPLICATION

(11) **EP 1 282 271 A1**
(43) Date of publication of application: **05.02.2003**
(21) Application number: 01306614.7
(22) Date of filing: 01.08.2001
(51) Int. Cl.: H04L 12/28, H04L 29/06

(54) **Interactive information delivery terminal and method of operating an interactive information delivery system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

An interactive information delivery terminal 10 comprises an information display unit 14, retrieval means 15 for generating control commands for transmission to an information store 7 over a first communications link 6, for the retrieval of information therefrom, and a user interface 13 for receiving control commands from a user device 2 over a second communications link 4 for controlling the retrieval means 15.

The terminal 10 is connected to the Internet 6 and a short range radio (piconet) interface (13), for example a "Bluetooth" interface. The terminal 10 is located in a position where it is not vulnerable to damage from influences such as the weather, or accidental or malicaious damage from members of the public, but where it is nevertheless visible, for example in a shop window display, visible through and protected by the window (3) itself. The radio interface 13 is located in such a position that it can make radio contact over a connection 4 with interface units (1) fitted to suitably equipped user handsets (2) in the publicly accessible region on the other side of the window (3). Through the internet 6 the terminal 10 may be connected to any other internet site, and in particular to a media server 7, operating as a client of that server. The user handset 2 can transmit control signals over the piconet to control the information displayed on the screen 14. Information not suitable for display on the screen 14, such as credit card details or audio data, may be transmitted over the piconet connection 4 or a cellular connection 5 to the handset.

## Description

This invention relates to interactive computer information display systems for displaying text or other visual information. Such systems are coming into widespread use, through information access systems such as the "Internet" World Wide Web (WWW). Large amounts of information are available to users having access to such systems. However, in order to gain access to such systems relatively expensive hardware is required, in particular a computer and a modem, limiting the availability of the information to users who have access to such a terminal. Furthermore, the hardware is typically bulky, and is not easily portable. Mobile systems, comprising a "laptop" computer and a cellular telephone, do exist, but because of the limited bandwidth available on mobile communications, these tend to be very slow.

Multimedia "kiosks" have been proposed for locations to which the public have access. However, the equipment is valuable, and its accessibility to the public makes it vulnerable to theft, vandalism, and tampering. The equipment is also not suitable for exposed locations, as it is not in general weatherproof. In order to identify the user, and allow payment to be made for the service if required, facilities such as a credit card "swipe" unit are also necessary.

International Patent application WO98/36552 discloses a system in which a mobile handset, such as a standard cellular telephone, may be used to control a fixed display unit, by setting up a data connection over the cellular telephone network between the cellular telephone and a server controlling the display unit. This allows a mobile user to access data over a high speed link, for display on a large screen terminal close to his current locality, whilst the terminal itself can be protected from theft, vandalism, the weather and other hazards by being located in an inaccessible, but visible, location such as behind a shop window.

However, this system requires the establishment of two separate data links, between the server and the user's mobile terminal and between the server and the fixed terminal. The present invention proposes an alternative arrangement.

According to the invention, there is provided an interactive information delivery terminal comprising an information display unit, retrieval means for generating control commands for transmission to an information store over a first communications link, for the retrieval of information therefrom, and a user interface for receiving control commands over a second communications link for controlling the retrieval means.

The associated user interface is preferably capable of operation as part of an *ad hoc* short range wireless interconnectivity system such as the system developed under the Trade Mark "Bluetooth". It uses radio interfaces in the 2.45GHz frequency band to allow suitably equipped portable electronic devices to connect and communicate wirelessly via short-range *ad hoc* networks. This system is designed to replace cables between portable consumer devices such as cellular telephones, headsets, laptop computers, personal digital assistants, digital cameras, and many other products. The Bluetooth system is described in Ericsson Review No 3, 1998, Jaap Haartsen, ***"BLUETOOTH - The universal radio interface for* ad hoc, *wireless connectivity".*** Such networks are referred to in that article, and in this specification, as "piconets". Each unit can simultaneously communicate with several other units. The Bluetooth version 1.0 specification was agreed in July 1999.

Using this invention a user does not need to actively express an intention to use the system: the mere physical presence of the user's handheld device is sufficient to establish a piconet connection with a nearby terminal. Therefore if the user wishes to use the service, there is no need for any preliminary connection procedure with the fixed terminal. Indeed, the fixed terminal, recognising the presence of the user device when the piconet connection is first established, may display an alert signal to the user to indicate the availability of the service. The alert may be diplayed on the fixed terminal or transmitted over the piconet connection to the user device.

An embodiment of the invention will now be further described, by way of example only, with reference to the drawings, which shows schematically an interactive information delivery system according to the invention, and the devices it co-operates with.

In the Figure a number of interactive information delivery terminals (10, 20, 30, 40, 50 etc) are connected to the Internet (6). Only one terminal 10 is shown in detail. It comprises a display unit (14), a client processor (15) for communicating with other devices through the internet (6), and a short range radio (piconet) interface (13), for example a "Bluetooth" interface. The terminal 10 is located in a position where it is not vulnerable to damage from influences such as the weather, or accidental or malicaious damage from members of the public, but where it is nevertheless visible. A typical example would be in a shop window display, visible through and protected by the window (3) itself. The radio interface 13 is located in such a position that it can make radio contact over a connection 4 with interface units (1) fitted to suitably equipped user handsets (2) in the publicly accessible region on the other side of the window (3). Through the internet 6 the terminal 10 (and the other terminals 20, 30, 40, 50) may be connected to any other internet site, and in particular to a media server 7, operating as a client of that server.

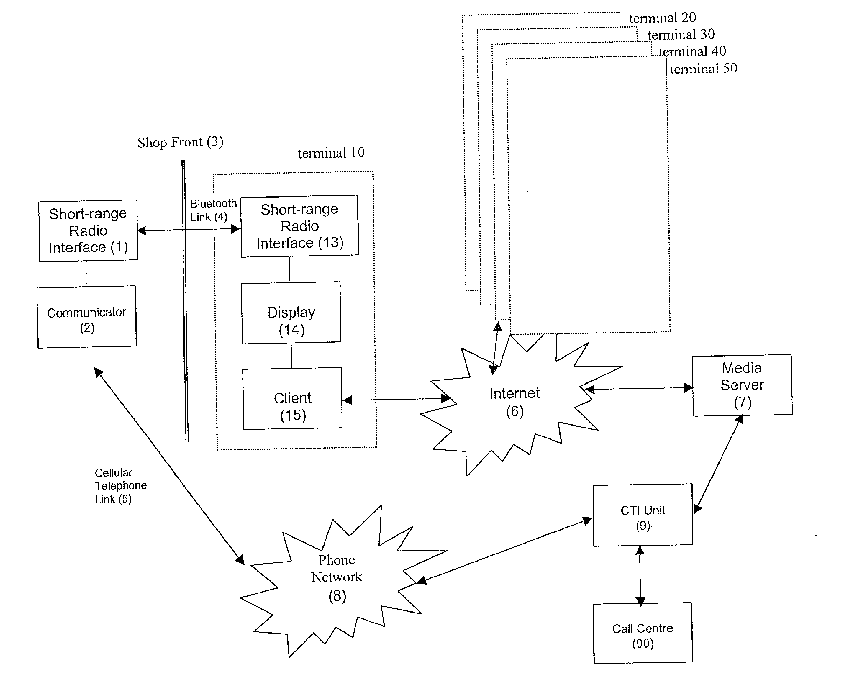

Some user handsets 2 may also be capable of connection over a radio connection such as a cellular telephone link 5, and through a telephone network 8, to a computer/telephony integration unit 9 associated with the media server 7. Such a unit is described in the aforementioned International Patent specification WO98/36552. Figure 1 also shows a call centre 90 associated with the computer/telephony integration unit 9.

The terminal equipment 10 consists of short-range (piconet) radio interface (13); a large colour display (14) such as a plasma screen or a projector; and a standard PC client interface (15). These relatively valuable items could be integrated behind a secure, vandal proof, weatherproof enclosure e.g. a shop window, such that the display can be seen and the interface 13 can communicate with the user's interface unit 1. In use, a user may access the terminal 10 with any portable communicator device (2) having a short-range piconet radio interface (1) operating according to the same system as the piconet interface 13. The user device 2 may take the form of a personal digital assistant (PDA), a mobile phone, or a simple RFID (radio frequency Identification Device) "tag" having only a basic identity code transmittable over a piconet connection.

The terminal 10 is configured to communicate over a broadband link, using the Internet (6), to a media server (7) and/or to other terminals (20). The server (7) is capable of delivering many types of content and streamed multimedia to the terminals.

The use of this system is as follows. A user arrives in proximity of the large public multimedia display (14). By means of the short-range radio interface (1) on the user's communicator device (2), the terminal's short-range radio interface (13) detects the user's presence, and transmits a message to the server 7. The server 7 responds by delivering an interactive page or other multimedia to the terminal 10 offering a range of services it has available. Using his/her communicator device 2 the user may control the terminal 10 (and therefore the server 7) using the short-range radio technology. The server 7 can identify the current location of the user from the identity of the client terminal 10 through which the user is accessing the data, so it can provide localised information. A user identity code may be transmitted to the terminal 10 and sent to the server (7) over the Internet (6) for the purpose of personalising the content to the user.

Four possible interaction scenarios will be discussed. It will be appreciated that others are possible. The level of interaction facilitated by the system is dependant on what the facilities the user has available to him when he arrives at the location of the terminal 10, and in particulatr the capabilities of his own handset .

### 1. High-end Interaction.

In the first scenario the user has a PDA style communicator (2) with a display and user interface and integrated piconet short-range radio technology (1). When the user device (1,2) is in proximity of the terminal 10 the interface units 1, 13 automatically establish a piconet connection 4, causing the communicator to display a message and/or vibrate to alert the user that interaction is possible. The display 14 may also respond to the establishment of the connection by displaying a welcome message to the user.

The user may accept this invitation to interact by pressing appropriate keys on his communicator device. The terminal 10 then causes the display (14) to provide feedback to the user, denoting that an interactive session has begun. Since the communicator device has a user interface that is specific to a particular platform (e.g. Palm Computing, Microsoft Pocket PC), the piconet interfaces (1,13) negotiate a set of capabilities and identify the platform. During this negotiation phase a set of usage profiles are determined. Such profiles are defined in the Bluetooth specification and describe various capabilities of Bluetooth devices. For eaxample a headset profile woiuld indicate that the device can send/receive audio only, whilst an FTP profile indicates that the device can send/receive files. These usage profiles allow the terminal to tailor the interaction to the user, as will be described. The FTP profile is required to download the client control program for the communicator.

If this phase is successful then the communicator (2) downloads a client control program over the piconet link (4). The communicator device (2) then executes this program giving the user a full set of controls for rich interaction with the terminal display. This local user interface allows the user to exchange information with the server that is sensitive (for example personal or financial details) or otherwise not suitable for viewing on the large public display 14, for example audio information. For example, if a video file is presented on the display 14, and the communicator device supports a headset profile, the client processor 15 may use the piconet connection 4 to transmit a soundtrack associated with the video file. This is useful in situations where audio from the display cannot be heard directly (for example if it is behind a shop window).

### 2. Mid-end Interaction

In the second scenario the user is carrying a mobile phone style communicator (2) with a keypad and integrated piconet short-range radio technology (1). As in the previous scenario, when the user is in proximity of the terminal 10 the communicator 2 displays a message, plays an alaert tone and/or vibrates to alert the user that interaction is possible, and if the user accepts this invitation to interact then the display (14) provides feedback to the user, denoting that an interactive session has begun. The user can control the on-screen menu system/cursor using the mobile phone keypad. The on screen menu indicates which keys should be pressed on the keypad of the handset 2 to access different services displayed on the screen 14 - for example press key "2" to scroll a cursor up a list, "8" to scroll down, or "5" to select the item currently identified by the cursor. Audio from the terminal could be sent to the earpiece of the communicator device using the piconet 4 (via the headset profile).

If the system is configured with a Computer/telephony interface (CTI) unit (9) attached to the media server (7) then it is possible to have the system establish a telephone connection with the handset 2 through the telephone network 5, 8. This could be made available either to facilitate a voice channel (for voice control/access to the server 7) or to link to a call centre (90) to complete a transaction (credit card payment), to receive help or for billing purposes. Connection to the call centre could be an option on the menu list referred to above

### 3. Multiple User Interaction.

It is possible for several user terminals 2 to interact with the display 14 simultaneously. This can be used for interactions in a social group, for example for booking a holiday or playing games. The Bluetooth piconet system can link up to eight devices, so seven users that are standing in proximity to the display 14 can cooperate with the terminal 10 in one session. Alternatively, the terminal 10 could detect users in a queue and deal with each one in turn, but simultaneously accessing content from the server 7 in preparation for full interactions with the next few users. If later stages of an interaction over the piconet connection do not require the use of the display 14 (for example payment details entered using the user's handheld device 2) a subsequent member of the queue may start to be served before the interaction with the first is completed. Another application is a group gaming and gambling activity: for example all the users watching a race on the display 14, but placing individual bets using their communicators 2.

### 4. Low-end Interaction.

In this scenario the user has an RFID tag. Such tags are basic piconet interface units capable of transmitting an identification code but having no other communications or other user-operable capability. They are generally used merely to indicate the presence of the tag (and any device to which it is fitted), for example to prevent pilfering of goods.

In this scenario, when a user having such a tag is in proximity of the terminal 10 (and its short-range radio interface 13) the tag transmits its unique identity code to the terminal 10 which forwards it to the server 7. The server responds with localised and personalised information for display on the display unit 14. Typically, since the user has no means of input to the display, he/she can only view content. A typical use in a retail setting would be to use RFID tags to replace customer loyalty cards. The customer could approach a display unit to check special offers/savings and the status of his/her account. Using RFID tags would also mean that the collection of loyalty points could be done passively at the checkout, the terminal 10 identifying the account to which the points are to be credited from the RFID tag identity. By providing multiple RFID tag reading piconet interfaces 13 all serving the same client processor 15, it is possible to determine the route being taken by the user, for example to identify whether the user is approaching or leaving the area where the display 14 can be seen.

## Claims

1. An interactive information delivery terminal comprising an information display unit, retrieval means for generating control commands for transmission to an information store over a first communications link, for the retrieval of information therefrom, and a user interface for receiving control commands from a user device over a second communications link for controlling the retrieval means.

2. A terminal according to claim 1, the user interface having means for recognising the presence of a user device and establishing a connection using the second communication means.

3. A terminal according to claim 2, the user interface having means for generating an alert to indicate that the connection has been established

4. A terminal according to claim 3 in which the alert is displayed on an output display unit of the terminal.

5. A terminal according to claim 3 or claim 4 wherein a signal is transmitted to the user device using the second communication means

6. A terminal according to any preceding claim, having means for transmitting display data over the second communication means.

7. A terminal according to claim 6, having means for identifying the nature of the user device, means for identifying data received from the information store that is suitable for transmission to the user device, means for selecting such data and transmitting it to said user device, and means for displaying on the display device data not suited for such transmission.

8. A terminal according to any preceding claim, having means for interaction with a plurality of user devices simultaneously.

9. A method of operating an interactive information delivery system comprising the steps of:
generating control commands by the information delivery system for transmission to an information store over a first communications link, for the retrieval of information therefrom, the control commands being activated in response to control commands received from a user device over a second communications link for controlling the retrieval means.

10. A mehod according to claim 9, compriing the steps of recognising the presence of a user device and establishing a connection over the second communication means.

11. A method according to claim 10, wherein the user interface generates an alert to indicate that the connection has been established

12. A method according to claim 11 in which the alert is displayed on an output display unit of the terminal.

13. A method according to claim 11 or 12 wherein an alert signal is transmitted to the user device using the second communication means.

14. A method according to any of claims 9 to 13 wherein display data is transmitted over the second communication means.

15. A method according to claim 14, wherein the terminal identifies the nature of the user device, identifies data received from the information store that is suitable for transmission to the user device and transmits such data to said user device, and displays on the display device data not suited for such transmission.

16. A method according to any of claims 9 to 15 preceding claim, wherein the terminal device can interact with a plurality of user devices simultaneously.
